(19)

Europäisches
Patentamt
European
Patent Office
Office européen
des brevets

(11)  **EP 2 487 651 A1**

(12)  # EUROPEAN PATENT APPLICATION

(43) Date of publication:
**15.08.2012 Bulletin 2012/33**

(51) Int Cl.:
*G06T 11/20* (2006.01)   *B62D 15/02* (2006.01)

(21) Application number: **12152029.0**

(22) Date of filing: **23.01.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.02.2011 DE 102011010859**

(71) Applicant: **Connaught Electronics Ltd.**
**Tuam, County Galway (IE)**

(72) Inventor: **Denny, Patrick Eoghan**
**Roscam, County Galway (IE)**

(74) Representative: **Jauregui Urbahn, Kristian**
**Valeo Schalter und Sensoren GmbH**
**CDA-IP**
**Laiernstraße 12**
**74321 Bietigheim-Bissingen (DE)**

(54)  **Method for operating a camera system in a motor vehicle, camera system and motor vehicle**

(57)   A solution is to be demonstrated, how an image representation (18) of a prospective trajectory (19) of a motor vehicle (1) can be superimposed on an image (17) of an environment (11) to an overall image in particularly reliable manner, without an expensive calibration having to be performed. In the proposed method for operating a camera system (2), an image (17) of an environment (11) is captured by a camera (5 to 10) and displayed on a display means (4). The prospective trajectory (19) of the motor vehicle (1) is determined. The image representation (18) of the prospective trajectory (19) is superimposed on the image (17) of the environment (11) to an overall image. A possible deviation of an unknown actual position from a known desired position of the camera (5 to 10) on the motor vehicle (1) is determined, and at one characteristic of the image representation (18) of the trajectory (19) is set based on the possible deviation.

Fig.4

**Description**

The invention to a method for operating a camera system including a camera and a display means in a motor vehicle. An image of an environment of the motor vehicle is captured by the camera and displayed on the display means. A prospective trajectory of the motor vesicle is determined, and an image representation representing the prospective trajectory is superimposed on the image of the environment to an overall image on the display means. The invention additional to a camera system formed for performing such a method, as well as a motor vehicle with such a camera system.

Camera systems for motor vehicles are already prior art. As is known, a plurality of cameras can be employed in a motor vehicle, which capture the entire environment around the motor vehicle. On a display means - like an LCD display - an image of the environment can then be displayed. For example, a region of the environment behind the motor vehicle (so-called "rear view") or else a region of the environment in front of the motor vehicle ("front view") can be represented on the display means. In order to support the driver in driving the motor vehicle, a prospective trajectory - thus future roadway - of the motor vehicle can also be determined, namely with the aid of a computing means. The prospective trajectory can be determined based on the respectively current steering angle of the motor vesicle. If the image of the environment is displayed on the display means, thus, this image can be superimposed on an image representation representing the determined prospective trajectory of the motor vehicle. In other words, the prospective trajectory can be projected onto the image of the environment such that an overall image is displayed on the display means, which represents a superposition of the image of the environment and of the image representation of the trajectory. Then, on the display means, the driver can then inform on how the currency adjusted steering angle the prospective trajectory of the motor vehicle with respect to its environment. For example, this can be particularly helpful in performing parking operations,

However, the position of the trajectory in the overall image is never one-hundred percent precise. By installation tolerances of the cameras on the motor vehicle, deviations of the nominal - thus calculated - position of the displayed trajectory from an unknown actual position, in which the trajectory should be ideally displayed, arise. Thus, an offset or a mismatch the displayed trajectory and the image of the environment, thus a mismatch between the trajectory and objects located in the environment arises. Here, calibration methods take remedial action, but which are particularly expensive to implement.

It is an object of the invention to demonstrate a solution how the image representation of the prospective trajectory can be superimposed on the image of the environment in a particularly reliable manner without much effort in a method of the initially mentioned type, in particular without expensive calibration methods having to be applied.

According to the invention, this object is solved by a method having the features of claim 1 as well as by a camera system having the features of claim 16, as well as by a motor vehicle having the features of claim 17. Advantageous embodiments of the invention are subject-matter of the dependent claims and of the description.

A method according to the invention serves for operating a camera system in a motor vehicle. The camera system includes a camera and a display means. The camera captures an image of an environment of the motor vehicle. The image of the environment is displayed on the display means. A prospective trajectory of the motor vehicle is determined - for example based on the current steering angle. An image representation representing the prospective trajectory is superimposed on the image of the environment to an overall image on the display means. According to the invention, it is provided that a possible deviation of an unknown actual position from a known desired position of the camera on the motor vehicle is determined and that at one characteristic of the image representation of the trajectory is set based on the possible deviation.

Thus, the invention follows the line to determine a possible deviation of the unknown actual position from the known desired position of the camera on the motor vehicle and to consider it upon overlaying the image representation of the trajectory on the image of the environment. The invention is based on the realization that the installation tolerances of the camera also have an influence on the position of the prospective trajectory in the overall image with respect to the image of the environment, and thus the displayed nominal position of the trajectory does not exactly correspond to the actual or ideal position. If - for example based on an installation tolerance of the camera - the possible deviation of the unknown actual position from the known, preset desired position of the camera on the motor vehicle is determined, thus, this information can be considered upon superposition of the image representation of the trajectory on the image of the environment. Namely, the possible deviation of the actual position from the desired position of the camera on the motor vehicle is a measure of the possible deviation of the position of the displayed trajectory from an unknown ideal position, in which the trajectory is to be displayed in the overall image with the given actual position of the camera, or a measure of a possible offset or mismatch between the displayed trajectory and the image of the environment. The two deviations - namely the deviation of the actual position of the camera from the desired position of the camera on the one hand, and the deviation of the position of the trajectory displayed in the overall image from its ideal position in the overall image or the offset (mismatch) on the other hand - are correlated with each other and are immediately related to other. Thus, the method has the advantage that the image representation of the trajectory can be superimposed on the image of the environment to an overall image with a reasonable precision despite the installation tolerances of the camera, without expensive calibration having to be made. A further advantage is in that the camera does not have to be mounted to the motor vehicle with a reduced installation tolerance, which would be particularly expensive and cost intensive in particular with motor vehicles.

Thus, at least one characteristic of the image representation of the trajectory is specified based on the possible deviation of the unknown actual position from the known desired position. For example, a width of the image representation of the trajectory - thus the width of a trajectory strip - can be adjusted based on the possible deviation as the characteristic. For example, the condition can apply that the greater the possible deviation is, the wider the displayed trajectory is. In this manner, it is managed to retouch the optionally present offset between the displayed trajectory and the image of the environment such that the driver appreciates a precise position of the trajectory in the overall image altogether.

Additional or alternatively, a transparency of the image representation of the trajectory with respect to the image of the environment can be adjusted based on the possible deviation as the characteristic. Hereby too, the optionally present offset between the displayed trajectory and the image of the environment can be reasonably "concealed" such that the driver appreciates a feasible position of the displayed trajectory altogether. However, this embodiment also has further advantages, which in particular have an effect upon application of the alpha blending method: by the variation of the transparency of the displayed trajectory with respect to the image of the environment, the progression of the luminance and chrominance of the overall image can be smoothed such that erratic progressions of luminance and chrominance in the overall image are not present. Thus, the so-called "cross luminance" (also known under the designation "dot crawl") can be prevented.

It proves particularly advantageous if the transparency of the image representation of the trajectory is varied at least in transverse direction of the trajectory, namely based on the possible deviation of the actual position from the desired position of the camera. This embodiment exploits the fact that the possible deviation of the unknown actual position from the known desired position of the camera on the motor vehicle and thus also the possible offset between the nominal position of the trajectory in the overall image can be represented by a probability distribution depending on the installation tolerance of the camera. This probability distribution at the same time specifies how the probabilities distribute to the possible positions of the prospective trajectory in the overall image. Starting from the known desired position of the camera on the motor vehicle and thus from the nominal position (calculated for the desired position of the camera) of the trajectory in the overall image, thus, by presetting the probability distribution, the transparency of the image representation of the trajectory can be varied in transverse direction of the trajectory such that the positions with the greatest probability are less transparent than those with a lower probability. Then, the driver appreciates a trajectory, the transparency of which is different with respect to the image of the environment in transverse direction or width direction of the trajectory, namely in particular according to a preset probability distribution. Thus, an adequate degree of accuracy can be ensured in the representation of the overall image.

Thus, the possible deviation of the actual position from the desired position of the camera can be determined - at least or exclusively - in transverse direction of the motor vehicle. Thus, the possible offset between the superimposed trajectory and the image of the environment in transverse direction of the motor vehicle is also determined. Then, the transparency of the image representation of the trajectory in transverse direction can also be varied and/or the width of the displayed trajectory can be adjusted.

The possible deviation of the unknown actual position from the known desired position of the camera on the motor vehicle and thus the possible offset between the trajectory and the image of the environment is preferably determined based on a mechanical installation tolerance of the camera on the motor vesicle. This installation tolerance can be determined in a development phase of the motor vehicle and be stored in the camera system. The installation tolerance can for example be particularly precisely determined with the aid of a CAD-based computer program. Therein, the entire tolerance chain starting from the wheels of the motor vehicle up to the installation position of the camera on the motor vehicle can be determined for the installation tolerance of the camera. If the camera is for example mounted to an exterior mirror of the motor vehicle, thus, the tolerance chain can be determined by the addition of the following individual tolerances: a mechanical tolerances between the position and the orientation of the motor vehicle with respect to the road; a tolerance between the exterior mirror and the vehicle door; a tolerance between the exterior mirror and the camera (thus between attachment screws and a housing of the camera); and a tolerance between an internal imager and the housing of the camera.

As already explained, for the possible deviation of the actual position from the desired position, a probability distribution can be preset, which - in particular considering the installation tolerance of the camera - represents the distribution of the probability for the unknown actual position of the camera and thus for the mismatch of the image representation of the trajectory to the image of the environment. This probability distribution also specifies how the probabilities for the possible positions of the prospective trajectory in the overall image are distributed. Then, at least one characteristic of the image representation of the trajectory - in particular the width and/or the transparency - can be set based on the probability distribution. For example, a Gaussian curve can be used as the probability distribution, thus a bell-shaped curve, which has a mirror-symmetric course with respect to a center. The probability distribution can be used to the effect that the position of the trajectory determined based on the known desired position of the camera on the motor vehicle is interpreted as the most probable position in the overall image, and besides this nominal position, further, less probable positions are defined based on the probability distribution. Then, the transparency of the image representation of the trajectory in transverse direction of the trajectory can be varied in the manner that the position with the greatest probability is less transparent than the further positions. Here, the condition can apply that the less the probability for the respective position is, the higher the transparency of the trajectory in this position is.

If a transparency of the image representation of the trajectory is adjusted as the characteristic, thus, the transparency of the image representation of the trajectory in transverse direction of the trajectory can be adjusted corresponding to the probability distribution. The transparency of the image representation of the trajectory is preferably steadily or continuously varied in transverse direction, namely according to the probability distribution.

The following approach proves particularly advantageous: A nominal position of the trajectory in the overall image is determined for the known desired position of the camera on the motor vehicle. Based on the installation tolerance of the camera, a tolerance position of the trajectory in the overall image deviating from the nominal position is determined. The transparency of the image representation of the trajectory in its transverse direction is then adjusted corresponding to the probability distribution such that in the nominal position the transparency is minimum - for example zero - and the transparency takes a predetermined value in the tolerance position, namely in particular from a range of values from 60 % to 90 %. Thus, based on the known desired position of the camera on the motor vehicle, the nominal position for the trajectory in the overall image can be determined on the one hand, and based on the installation tolerance of the camera, the deviating tolerance position for the trajectory in the overall image can be determined on the other hand. If the transparency of the image representation of the trajectory in the two determined positions is known, thus, the transparency can also be adjusted in other positions of the image representation of the trajectory in transverse direction corresponding to the probability distribution.

The transparency of the image representation of the trajectory can be symmetrically varied in transverse direction of the trajectory, namely steadily corresponding to a Gaussian distribution. Thus, the displayed image representation of the trajectory can have the least transparency in its center, and the transparency can be continuously increased starting from the center towards the outside. Thus, the driver appreciates an image representation, which effectively completely masks the image of the environment in its center and is predominantly transparent on its respective borders.

The precision upon superposition of the image representation of the trajectory on the image of the environment can be further increased by respectively determining different tolerance positions for the trajectory with respect to the nominal position of the trajectory for different values of a steering angle of the motor vehicle. For different values of the current steering angle, thus, different distributions of the transparency of the image representation of the trajectory in transverse direction are adjusted.

Furthermore, it is reasonable to each determine different tolerance positions for the trajectory for different regions of the overall image. Thus, the fact is also taken into account that the image of the environment usually has a greater distortion at its borders than in the center. At the borders of the overall image, thus, the deviation of the tolerance position from the nominal position can be greater than in the center of the overall image. In this manner, it is managed to further increase the accuracy in producing the overall image.

As already explained, the image of the environment and the image representation of the trajectory can be superimposed to the overall image according to the alpha blending method. This method has the particular advantage that erratic progressions of the luminance and chrominance in the overall image can be prevented.

Preferably, the overall image is calculated based on the following function:

$$OP(x,y) = \alpha(x,y) \cdot TP(x,y) + [1 - \alpha(x,y)] \cdot BP(x,y).$$

Therein, x, y denote the coordinates of the overall image, OP(x,y) denotes a pixel of the overall image for the coordinates x and y, $\alpha(x,y)$ denotes an $\alpha$ parameter of the alpha blending method for the coordinates x and y, TP(x,y) denotes a pixel of a complete or non-transparent trajectory image for the coordinates x and y, as well as BP(x,y) denotes a pixel of the image of the environment for the coordinates x and y, By application of the above formula, the superposition of the image representation of the trajectory on the image of the environment can be effected with particularly low effort. The $\alpha$ parameter $\alpha(x,y)$ can have a distribution corresponding to the mentioned probability distribution in transverse direction of the trajectory.

It proves particularly advantageous if the possible deviation - and in particular the mentioned probability distribution - is also determined considering at least one of the following parameters:

- an age of the motor vehicle and/or
- a tire pressure in a tire of the motor vehicle and/or
- a weight of a loading of the motor vehicle and/or the distribution of the loading in the motor vehicle and/or

- an inclination angle of the motor vehicle, whether about the vehicle longitudinal axis and/or about the vehicle transverse axis and/or about the vehicle vertical axis, and/or
- an offset of a known pixel, in particular of a vanishing point, in the image of the environment.

By considering the above mentioned parameters, the possible deviation of the unknown actual position from the known desired position of the camera on the motor vehicle or the probability distribution for this deviation can each be determined depending on situation and according to need.

The prospective trajectory is preferably determined depending on a current steering angle of the motor vehicle.

According to the invention, moreover, a camera system for a motor vehicle is provided. The camera system includes a camera for capturing an image of an environment of the motor vehicle, as well as a computing means for determining a prospective trajectory of the motor vehicle and for superimposing an image representation representing the prospective trajectory on the image of the environment to an overall image. The camera system additional includes a display means for displaying the overall image, Based on a possible deviation of an unknown actual position from a known desired position of the camera on the motor vehicle, the computing means can set at least one characteristic of the image representation of the trajectory.

A motor vehicle according to the invention has a camera system according to the invention. The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features in and feature combinations mentioned below in the description of figures and/or shown in the figures alone are usable not only in the respectively specified combination, but also in other combinations or else alone. Now, the invention is explained in more detail by way of individual preferred embodiments, as well as with reference to the attached drawings.

There show:

Fig. 1    in schematic illustration a motor vehicle including a camera system according to an embodiment of the invention;

Fig. 2    an illustration, based on which a method according to an embodiment of the invention is explained in more detail;

Fig. 3    a probability distribution, based on which the transparency of a trajectory displayed on a display means is adjusted; and

Fig. 4    in schematic illustration an overall image displayed on the display means.

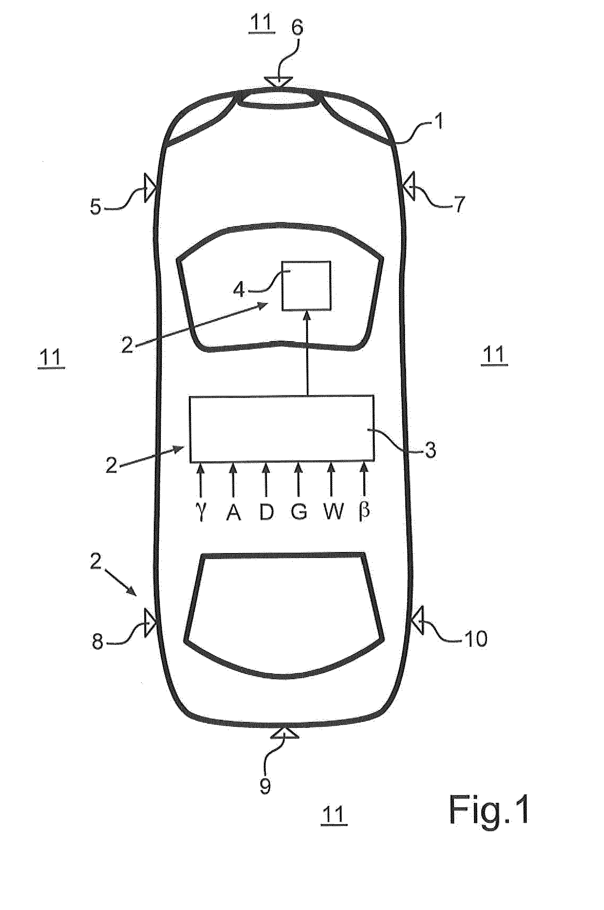

A motor vehicle 1 shown in Fig. 1 is for example a passenger car. It has a camera system 2, which includes the following components: a computing means 3, a display means 4 as well as a plurality of cameras 5 to 10. The cameras 5 to 10 are mounted to the motor vehicle 1 such that they capture an entire environment 11 around the motor vehicle 1. The camera 5 is disposed in the front region of the left lateral flank, like in the left boundary region of the front bumper. The camera 6 is disposed on the front side of the motor vehicle 1, namely for example centrally on the front bumper. The camera 7 is disposed mirror-symmetrically to the camera 5 on the opposing side of the motor vehicle 1. The camera 8 is disposed in the rear region of the left lateral flank of the motor vehicle 1, namely for example in the left boundary region of a rear bumper. The camera 9 is disposed on the tail of the motor vehicle 1, like centrally on the rear bumper. Finally, the camera 10 is disposed mirror-symmetrically to the camera 8 on the opposing side of the motor vehicle 1.

The number as well as the arrangement of the cameras 5 to 10 are only exemplarily illustrated in Fig. 1. Both the number and the arrangement of the cameras 5 to 10 can vary according to the embodiment of the camera system 2.

The display means 4 can for example be an LCD display or else a head-up display.

The computing means 3 receives the image data of all of the cameras 5 to 10 and processes it. The computing means 3 can display very different images of the environment 11 on the display means 4, namely for example an image of a region of the environment 11 behind the motor vehicle 1 ("rear view") or else an image of a region of the environment 11 in front of the motor vehicle 1 ("front view").

The computing means 3 also receives data with information on the respectively current steering angle $\gamma$ of the motor vehicle 1. The computing means 3 can determine a prospective trajectory, thus the future roadway, of the motor vesicle 1 depending on the current steering angle $\gamma$. For example, the computing means 3 can determine the prospective trajectory of the motor vehicle 1 each up to a distance of 4 m or 5 m or 6 m or 7 m. If the steering angle $\gamma$ is varied, thus, the prospective trajectory is corrected or again determined.

The computing means 3 can produce an image representation representing the determined prospective trajectory. The computing means 3 can produce an overall image from an image of the environment 11 and the image

5

representation of the trajectory, which can be displayed on the display means 4. The overall image shows a superposition of the image representation of the trajectory on the image of the environment 11. Therein, the position of the prospective trajectory with respect to the image of the environment in the overall image is to correspond to the actual position of this trajectory in the actual environment 11 of the motor vehicle 1. In other words, the prospective trajectory is to be displayed realistic in the overall image.

However, the realistic display of the prospective trajectory in the overall image is not possible without expensive calibration. Namely, due to the installation tolerances of the cameras 5 to 10, deviations of the nominal position of the displayed trajectory from the unknown "ideal" position result. One refers to an offset or a mismatch between the displayed trajectory and the image of the environment. These deviations result due to a deviation of a real actual position of the cameras 5 to 10 from a planned desired position due to installation and mechanical tolerances.

The installation tolerances of the cameras 5 to 10 are known - they can for example be determined in a development process of the motor vehicle 1. These mechanical installation tolerances can be stored in the computing means 3, namely in a memory. In the development process, these tolerances can be determined with the aid of a CAD-based computer program. An installation tolerance specifies how much the real actual position of a camera 5 to 10 is allowed to deviate from the planned desired position in the worst case. If these installation tolerances are known, thus, the possible deviation of the actual position from the desired position of the cameras 5 to 10 can also be determined as a probability distribution. Accordingly, the possible deviation of the nominal position of the trajectory in the overall image from the "ideal" position - thus the possible mismatch - can also be determined as a probability distribution.

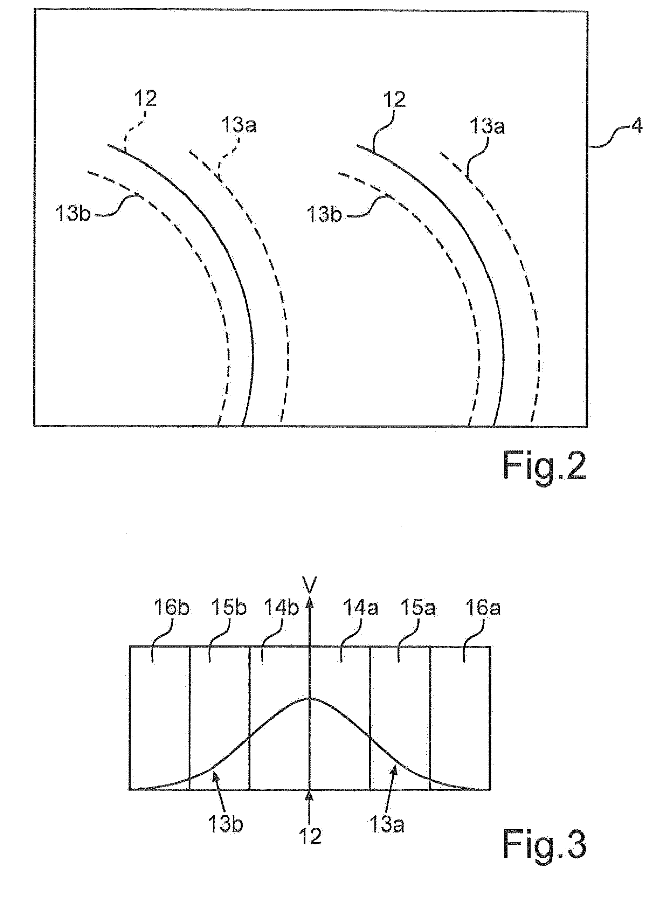

Now, with reference to Fig. 2, it is explained how the image representation of the trajectory is superimposed on the image of the environment 11 to an overall image on the display means 4. In Fig. 2, a nominal position 12 for the prospective trajectory is each represented for the two sides of the motor vehicle 1, which results for the planned desired position of the cameras 5 to 10. Furthermore, tolerance positions 13a, 13b are illustrated, which result for the known installation tolerance of the cameras 5 to 10. This means that the tolerance positions 13a, 13b are little probable, while the nominal position 12 is most probable. Now, a probability distribution V for the possible positions of the trajectory in the overall image is defined, as it is exemplarily illustrated in Fig. 3. In the embodiment, the probability distribution V is a Gaussian distribution. This probability distribution V also specifies how the probabilities distribute to the possible positions of the cameras 5 to 10 and thus to the possible mismatches of the displayed trajectory. In other words, by this probability distribution V, it is also specified, how the probabilities distribute to the possible deviations of the actual position from the planned desired position of a camera 5 to 10. The probability distribution V illustrated in Fig. 3 has its maximum in the nominal position 12 Fig. 2). For example, the probability distribution V can be configured such that the tolerance positions 13a, 13b can occur with a probability from a range of values from 10 % to 30 %. The probability distribution V is divided in plural ranges 14a, 14b, 15a, 15b, 16a, 16b, which represent different probability ranges. The ranges 14a, 14b represent a relatively high probability, the ranges 15a, 15b represent a low probability, and the ranges 16a, 16b represent a relatively low probability.

The generation of the image representation for the prospective trajectory is effected as follows: The prospective trajectory is displayed in the form of two strips extending parallel to each other, namely a strip for the left wheels and a strip for the right wheels of the motor vehicle. The width of the respective strips is determined considering the probability distribution V. For example, the strips can each have a width limited by the tolerance positions 13a, 13b. However, this width can also be slightly larger. The transparency of the trajectory - thus of the two strips - is varied in transverse direction of the respective strips. Therein, the transparency is adjusted steadily corresponding to the probability distribution V such that in the nominal position 12 the transparency is minimum, in particular zero, and steadily increases towards the outside. In the tolerance positions 13a, 13b, the transparency can for example be 80 %.

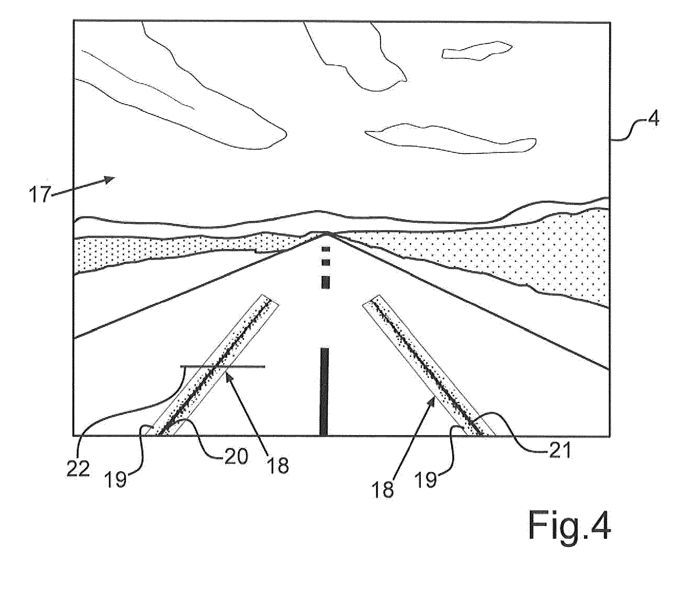

An example for an overall image, which is produced by superposition of an image of the environment 11 and the image representation of the trajectory, is illustrated in Fig. 4. The overall image is displayed on the display means 4. The overall image includes an image 17 of the environment 11 of the motor vesicle 1 as well as an image representation 18 of a prospective trajectory 19 of the motor vehicle 1. Here, the prospective trajectory 19 is composed of two strips 20, 21, which are each associated with one side of the motor vehicle 1. As is apparent from Fig. 4, the steering wheel of the motor vesicle 1 is in the home position such that the prospective trajectory 19 is straight. The transparency of the two strips 20, 21 varies in transverse direction 22, which here at the same time represents the vehicle transverse direction. As is apparent from Fig. 4, the transparency is largest at the respective borders of the two strips 20, 21 and lowest in the middle.

For producing the overall image, as is illustrated in Fig. 4, the alpha blending method is used. In this method, the image 17 of the environment 11 as well as the image representation 18 of the trajectory 19 are superimposed to the overall image, namely considering the so-called alpha channel. Here, the following relation applies:

$$OP(x,y) = \alpha(x,y) \cdot TP(x,y) + \left[1 - \alpha(x,y)\right] \cdot BP(x,y).$$

Therein:

- OP(x,y) denotes a pixel of the overall image for the coordinates x and y,
- α(x,y) denotes an α parameter for the coordinates x and y, wherein α(x,y) is in a range of values from zero (full transparency) to one (full opacity),
- TP(x,y) denotes a pixel of a trajectory image for the coordinates x and y for producing the image representation 18, and
- BP(x,y) denotes a pixel of the image 17 of the environment 11 for the coordinates x and y.

Therein, the α parameter α(x,y) has a distribution in transverse direction of the trajectory 19, which corresponds to the probability distribution V, such that the progression of the transparency is also adjusted corresponding to the probability distribution V.

Again with reference to Fig. 2, the tolerance positions 13a, 13b can also be determined depending on the respectively current steering angle γ. For different steering angles γ, respectively different tolerance positions 13a, 13b can be determined for the trajectory 19. These tolerance positions 13a, 13b can also vary depending on the position in the overall image; because the distortion of the image is greater at its boundaries than in the center.

For influencing the probability distribution V or the tolerance position 13a, 13b, further parameters can also be used, which the computing means 3 receives:

- an information A on the current age of the motor vehicle 1, and/or
- an information on a tire pressure D of the respective tires of the motor vehicle 1, and/or
- an information on a weight G of a loading of the motor vesicle 1 and/or on a distribution W of the loading, and/or
- an inclination angle β of the motor vesicle 1, namely about the vehicle vertical axis and/or the vehicle longitudinal axis and/or the vehicle transverse axis.

Considering the mentioned parameters, the probability distribution V or the tolerance position 13a, 13b can be made plausible such that the superposition of the image representation 18 of the trajectories 19 on the image of the environment 11 to the overall image 17 can also be precisely effected. For example, based on the mentioned parameters, the width of the probability distribution V can be varied and/or for example an asymmetrical probability distribution V can be defined.

**Claims**

1. Method for operating a camera system (2) including a camera (5 to 10) and a display means (4) in a motor vehicle (1) by

    - capturing an image (17) of an environment (11) of the motor vehicle (1) by the camera (5 to 10) and displaying the image (17) on the display means (4),
    - determining a prospective trajectory (19) of the motor vehicle (1), and
    - superimposing an image representation (18) representing the prospective trajectory (19) on the image (17) of the environment (11) to an overall image on the display means (4),

    **characterized by**

    - determining a possible deviation of an unknown actual position from a known desired position of the camera (5 to 10) on the motor vehicle (1), and
    - setting at least one characteristic of the image representation (18) of the trajectory (19) based on the possible deviation.

2. Method according to claim 1,
    **characterized in that**
    as the characteristic, a width of the image representation (18) of the trajectory (19) is adjusted based on the possible deviation.

3. Method according to claim 1 or 2,
    **characterized in that**
    as the characteristic, a transparency of the image representation (18) of the trajectory (19) with respect to the image (17) of the environment (11) is adjusted based on the possible deviation.

**4.** Method according to claim 3,
**characterized in that**
the transparency of the image representation (18) of the trajectory (19) is varied at least in transverse direction (22) of the trajectory (19).

**5.** Method according to any one of the preceding claims,
**characterized in that**
the possible deviation in transverse direction of the motor vehicle (1) is determined.

**6.** Method according to any one of the preceding claims,
**characterized in that**
the possible deviation is determined based on an installation tolerance of the camera (5 to 10) on the motor vehicle (1).

**7.** Method according to any one of the preceding claims,
**characterized in that**
for the possible deviation, a probability distribution (V) is preset, which represents the distribution of the probability for the unknown actual position, in particular considering the installation tolerance of the camera (5 to 10), wherein at least one characteristic of the image representation (18) of the trajectory (19) is set based on the probability distribution (V).

**8.** Method according to claim 7,
**characterized in that**
a Gaussian curve is preset as the probability distribution (V).

**9.** Method according to claim 7 or 8,
**characterized in that**
as the characteristic, a transparency of the image representation (18) of the trajectory (19) is adjusted, and that the transparency of the image representation (18) of the trajectory (19) in transverse direction (22) of the trajectory (19) is adjusted corresponding to the probability distribution (V).

**10.** Method according to any one of claims 7 to 9,
**characterized by**

- determining a nominal position (12) of the trajectory (19) in the overall image for the desired position of the camera (5 to 10),
- based on the installation tolerance of the camera (5 to 10), determining a tolerance position (13a, 13b) of the trajectory (19) in the overall image deviating from the nominal position (12), and
- adjusting a transparency of the image representation (18) of the trajectory (19) in transverse direction (22) of the trajectory (19) corresponding to the probability distribution (V) such that the transparency is minimum in the nominal position (12) and the transparency adopts a predetermined value in the tolerance position (13a, 13b), in particular from a range of values from 60% to 90%.

**11.** Method according to claim 10,
**characterized in that**
for different values of a steering angle (γ) of the motor vehicle (1), respectively different tolerance positions (13a, 13b) are determined.

**12.** Method according to claim 10 or 11,
**characterized in that**
for different regions of the overall image, respectively different tolerance positions (13a, 13b) are determined.

**13.** Method according to any one of the preceding claims,
**characterized in that**
the image (17) of the environment (11) and the image representation (18) of the trajectory (19) are superimposed to the overall image according to the alpha blending method.

**14.** Method according to claim 13,
**characterized in that**

the overall image is calculated based on the following function:

$$OP(x,y) = \alpha(x,y) \cdot TP(x,y) + \left[1 - \alpha(x,y)\right] \cdot BP(x,y),$$

wherein x, y denote the coordinates of the overall image, OP(x,y) denotes a pixel of the overall image for the coordinates x and y, $\alpha(x,y)$ denotes an alpha parameter for the coordinates x and y, TP(x,y) denotes a pixel of a trajectory image for the coordinates x and y, and BP(x,y) denotes a pixel of the image (17) of the environment (11) for the coordinates x and y.

15. Method according to any one of the preceding claims,
**characterized in that**
the possible deviation is also determined considering at least one of the following parameters:

- an age (A) of the motor vehicle (1) and/or
- a tire pressure (D) in a tire of the motor vehicle (1) and/or
- a weight (G) of a loading of the motor vehicle (1) and/or
- an inclination angle (p) of the motor vehicle (1) and/or
- an offset of a known pixel, in particular of a vanishing point, in the image (17) of the environment (11).

16. Camera system (2) for a motor vehicle (1), including:

- a camera (5 to 10) for capturing an image (17) of an environment (11) of the motor vehicle (1),
- a computing means (3) for determining a prospective trajectory (19) of the motor vehicle (1) and for superimposing an image representation (18) representing the prospective trajectory (19) on the image (17) of the environment (11) to an overall image, and
- a display means (4) for displaying the overall image,
**characterized in that**
the computing means (3) is configured to set at least one characteristic of the image representation (18) of the trajectory (19) based on a possible deviation of an unknown actual position from a known desired position of the camera (5 to 10) on the motor vehicle (1).

17. Motor vehicle (1) including a camera system (2) according to claim 16.

Fig.1

Fig.2

Fig.3

Fig.4

Europäisches
Patentamt

European
Patent Office

Office européen
des brevets

# EUROPEAN SEARCH REPORT

Application Number

EP 12 15 2029

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 170 172 B1 (TOYOTA MOTOR CO LTD [JP]; AISIN SEIKI [JP]) 17 September 2008 (2008-09-17) | 1-10, 15-17 | INV. G06T11/20 B62D15/02 |
| Y | * paragraph [0001] - paragraph [0004] * <br> * paragraph [0011] - paragraph [0031] * <br> ----- | 11-14 | |
| Y | US 2007/010918 A1 (SHIMAZAKI KAZUNORI [JP] ET AL) 11 January 2007 (2007-01-11) | 11,12 | |
| A | * paragraph [0060] - paragraph [0062] * <br> * figures 1, 2, 4,8, 9, 10 * <br> ----- | 1-10,13, 17 | |
| Y | ALVY RAY SMITH: "Image Compositing Fundamentals", INTERNET CITATION, 15 August 1995 (1995-08-15), XP002300478, Retrieved from the Internet: URL:http://web.archive.org/web/20030619033 150/http://www.cs.princeton.edu/courses/ar chive/fall00/cs426/papers/smith95a.pdf [retrieved on 2003-06-19] * the whole document * <br> ----- | 13,14 | |

|  |  |
|---|---|
|  | TECHNICAL FIELDS SEARCHED (IPC) |
|  | G06T B62D |

The present search report has been drawn up for all claims

| Place of search | Date of completion of the search | Examiner |
|---|---|---|
| Munich | 3 April 2012 | Katartzis, Antonios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 12 15 2029

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2012

| Patent document cited in search report | | Publication date | Patent family member(s) | | Publication date |
|---|---|---|---|---|---|
| EP 1170172 | B1 | 17-09-2008 | EP | 1170172 A2 | 09-01-2002 |
| | | | JP | 3619753 B2 | 16-02-2005 |
| | | | JP | 2002019492 A | 23-01-2002 |
| US 2007010918 | A1 | 11-01-2007 | AT | 491621 T | 15-01-2011 |
| | | | AU | 2005235040 A1 | 03-11-2005 |
| | | | EP | 1737723 A1 | 03-01-2007 |
| | | | JP | 4466200 B2 | 26-05-2010 |
| | | | JP | 2005329915 A | 02-12-2005 |
| | | | KR | 20060018248 A | 28-02-2006 |
| | | | TW | I265882 B | 11-11-2006 |
| | | | US | 2007010918 A1 | 11-01-2007 |
| | | | WO | 2005102823 A1 | 03-11-2005 |

EPO FORM P0459

For more details about this annex : see Official Journal of the European Patent Office, No. 12/82